# EUROPÄISCHE PATENTSCHRIFT

(11) **EP 3 424 098 B1**
(45) Veröffentlichungstag und Bekanntmachung des Hinweises auf die Patenterteilung: **08.01.2020**
(21) Anmeldenummer: 17707333.5
(22) Anmeldetag: 27.02.2017
(51) Int. Cl.: H01M 4/133, H01M 4/134, H01M 4/36, H01M 4/38, H01M 4/587, H01M 10/052

(54) **HERSTELLUNG VON SI/C-KOMPOSITPARTIKELN**
MANUFACTURE OF SI/C COMPOSITE PARTICLES
FABRICATION DE PARTICULES COMPOSITES SI/C

(30) Priorität: 01.03.2016 DE 102016203349
(43) Veröffentlichungstag der Anmeldung: 09.01.2019
(73) Patentinhaber: Wacker Chemie AG, 81737 München (DE)
(72) Erfinder: TROEGEL, Dennis, 91242 Ottensoos (DE); PANTELIC-SEIDL, Jelena, 82110 Germering (DE)
(74) Vertreter: Ege, Markus
(86) Internationale Anmeldenummer: PCT/EP2017/054525
(87) Internationale Veröffentlichungsnummer: WO 2017/148871

(56) Entgegenhaltungen:
- WO-A1-2014/015139
- CN-A- 103 560 234
- JP-A- 2012 043 547
- US-A1- 2011 165 468

## Beschreibung

Die Erfindung betrifft ein Verfahren zur Herstellung von Präkompositpartikeln mittels Sprühtrocknung von Polymeren und Siliciumpartikel enthaltenden Zusammensetzungen, so erhältliche Präkompositpartikel, ein Verfahren zur Herstellung von Si/C-Kompositpartikeln durch thermische Behandlung der Präkompositpartikel, so erhältliche Si/C-Kompositpartikel und deren Verwendung in Elektrodenmaterialien für Lithiumionen-Batterien, insbesondere zur Herstellung der negativen Elektroden von Lithiumionen-Batterien.

Wiederaufladbare Lithium-Ionen-Batterien sind momentan die kommerziell verfügbaren elektrochemischen Energiespeicher mit den höchsten Energiedichten von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere Reichweiten der Fahrzeuge zu erreichen.

Als negatives Elektrodenmaterial ("Anode") wird in der Praxis gegenwärtig vor allem graphitischer Kohlenstoff verwendet. Graphitischer Kohlenstoff zeichnet sich durch seine stabilen Zykleneigenschaften und seine, im Vergleich zu Lithiummetall, das in Lithium-Primärzellen verwendet wird, recht hohe Handhabungssicherheit aus. So erfährt graphitischer Kohlenstoff bei der Ein- und Auslagerung von Lithium nur geringe Volumenänderungen, beispielsweise im Bereich von 10% für die Grenzstöchiometrie von LiC₆. Nachteilig ist jedoch seine relativ niedrige elektrochemische Kapazität von theoretisch 372 mAh/g, die nur etwa ein Zehntel der mit Lithiummetall theoretisch erreichbaren elektrochemischen Kapazität entspricht.

Dagegen besitzt Silicium mit 4199 mAh/g die höchste bekannte Speicherkapazität für Lithium-Ionen. Nachteiligerweise erleiden Silicium enthaltende Elektrodenaktivmaterialien beim Laden bzw.

Entladen mit Lithium extreme Volumenänderungen von bis ca. 300%. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interface; SEI), was zu einem irreversiblen Verlust an mobilem Lithium führt.

Um die Probleme im Zusammenhang mit der starken Volumenausdehnung des Aktivmaterials und der SEI-Bildung in Si-haltigen Anoden zu lösen, wurden in den letzten Jahren verschiedene Ansätze zur elektrochemischen Stabilisierung Si-haltiger Elektrodenaktivmaterialien verfolgt, wie beispielsweise beschrieben von A. J. Appleby in J. Power Sources 2007, 163, Seiten 1003 bis 1039. Vielfach wird Silicium-haltiges Aktivmaterial in Kombination mit Kohlenstoff eingesetzt. In einem Ansatz wird das Si-haltige Aktivmaterial in Form einer physikalischen Mischung mit Graphit in die Elektrodenbeschichtung einzusetzen, wie in EP 1730800 B1 gelehrt. In einem anderen Ansatz werden die beiden Elemente Silicium und Kohlenstoff strukturell zu einem Komposit-Material verbunden, wie in einem Übersichtsartikel von M. Rossi in J. Power Sources 2014, 246, Seiten 167 bis 177 zusammengefasst.

Ein gängiges Verfahren zur Herstellung von sphärischen, mikroskaligen Kohlenstoff-Partikeln ist die Sprühtrocknung. Hierbei werden Lösungen oder Dispersionen von Kohlenstoff-Precursoren (C-Precursor), wie Zucker, Lignin, Polyvinylalkohole, Polyalkylenoxide oder Resorcin-Formaldehyd-Harz, zu Tröpfchen versprüht und anschließend getrocknet unter Bildung von Partikeln, deren Partikelgröße und Partikelform der Tropfenform und Tropfengröße der versprühten Tröpfchen entspricht. Die so erhaltenen getrockneten, sphärischen C-Precursorpartikel können durch anschließende Carbonisierung in Partikel aus amorphem Kohlenstoff überführt werden. So beschreiben die JP1301717 und JP64043531 die Herstellung von Polyacrylnitril-Mikrosphären mittels Sprühtrocknung, wobei vor oder während des Sprühvorgangs Alkohol als Nicht-Solvens für Polyacrylnitril hinzugemischt wird. Die WO-A 08069633 lehrt das Sprühtrocknen von Kohlenstoff-Precursoren in Gegenwart von oberflächenaktiven Additiven. Aus der CN 102723469 ist die Sprühtrocknung von Mischungen enthaltend Polymerharz, beispielsweise Phenolharz, und Graphit bekannt.

In weiteren Ansätzen werden zur Sprühtrocknung Dispersionen eingesetzt, die neben C-Precursoren zusätzlich Silicium-Nanopartikel enthalten. Carbonisierung so erhaltener PräkompositPartikel führt zu Si/C-Kompositpartikeln, wie beispielsweise beschrieben in US2011165468 oder von B. Li in Electrochem. Comm. 2014, 49, Seiten 98 bis 102. F. Beguin beschreibt in Electrochimica Acta 2015, 174, Seiten 361 bis 368 entsprechende Verfahren mit Polyvinylalkohol als C-Precursor. H. Cui beschreibt in Ceramics Int. 2015 (im Druck) die Herstellung von porösen Si/C-Kompositen, indem SiO₂-beschichtete nano-SiliciumPartikel zusammen mit Phenolharz versprüht und anschließend zu Si/C-Kompositpartikeln carbonisiert werden. Abschließend wird die SiO₂-Beschichtung mit Flusssäure herausgeätzt.

Schließlich sind auch Ansätze bekannt, in denen zur Sprühtrocknung Dispersionen eingesetzt werden, die Kohlenstoff-haltige Additive, sauerstoffreiche C-Precursoren und nano-Silicium enthalten. Anschließende Carbonisierung ergibt dann Si/C-Kompositpartikel. So beschreibt F. Su (J. Mater Chem. A, 2015, 3, Seiten 5859 bis 5865) die Sprühtrocknung von graphitisiertem Nadelkoks zusammen mit Nano-Silicium und Saccharose und anschließendes Carbonisieren. F. Su (RSC Adv. 2014, 4, Seiten 43114 bis 43120) beschreibt einen analogen Ansatz unter Einsatz von Leitruß, nano-Silicium und Saccharose. Y. Yang (Electrochimica Acta 2015, 178, Seiten 65 bis 73) setzt hierfür Carbon-Nanotubes, Nano-Silicium und Phenolformaldehydharz ein. X. Hou (J. Power Sources 2014, 248, Seiten 721 bis 728) beschreibt ein zweistufiges Verfahren zur Herstellung von Si/C-Kompositen, in dem zuerst nano-Silicium zusammen mit Graphit und als C-Precursor Citronensäure sprühgetrocknet werden. Die Trocknungsprodukte wurden nach Temperaturbehandlung mit Pech beschichtet, anschließend einer Sprühtrocknung und schließlich einer Pyrolyse unterworfen.

Es bereitet jedoch weiterhin Probleme, mittels Sprühtrocknung von Polymeren und Siliciumpartikeln enthaltenden Dispersionen Partikel herzustellen, die nach Pyrolyse zu geeigneten Si/C-Kompositpartikeln für Elektrodenmaterialien von Lithiumionen-Batterien führen und insbesondere die hierfür gewünschten Teilchengrößen sowie möglichst enge Teilchengrößenverteilungen aufweisen. Gewünscht ist insbesondere, die in Dispersion vorliegenden Primärpartikel durch Sprühtrocknung in entsprechende partikuläre Feststoffe sowie anschließend durch Carbonisieren in entsprechende Si/C-Kompositpartikel zu überführen, ohne dass es im Zuge der Sprühtrocknung oder der Carbonisierung zu einer Partikelaggregation, d.h. einem Zusammenwachsen unterschiedlicher Primärpartikel kommt. Dementsprechend soll nach Möglichkeit jedes beim Versprühen entstehende Tröpfchen beim Trocknen in ein separates Partikel überführt werden. Bei herkömmlichen Sprühtrocknungsverfahren tritt eine Aggregation von Primärpartikeln in erheblichem Maße auf, was zu getrockneten Partikeln mit entsprechend großen Durchmessern und breiten Teilchengrößenverteilungen führt. Werden herkömmliche Sprühtrocknungsprodukte carbonisiert, so kann hierbei eine Versinterung von Partikeln auftreten, so dass auch in diesem Schritt eine unerwünschte Partikelaggregation erfolgen kann, wodurch große Partikel mit üblicherweise breiten Teilchengrößenverteilungen gebildet werden. Partikel mit unerwünschter Größe, d.h. störendes Über- oder Unterkorn, können zwar durch Sieben oder Sichten abgetrennt werden. Ein solcher zusätzlicher Arbeitsschritt ist aber aufwändig und führt zudem zu Abfallmaterial. Si/C-Kompositpartikel mit großen Durchmessern können bei Einsatz in Lithiumionen-Batterien fatal sein, da solche Partikel die Schichtdicke von Anodenmaterial in den Batterien überschreiten können und damit die Elektrode oder den Separator der Batterie durchstoßen können, was zu einem Kurzschluss der Batterie führt und damit die Funktionsfähigkeit der Batterie terminiert. Diese Problematik ist umso gravierender, als das in den Partikeln enthaltene Silicium während der Ladezyklen extreme Volumenausdehnungen erfährt, so dass sich das Volumen großer Partikel extrem vergrößert. Insgesamt sind sämtliche Probleme im Zusammenhang mit dem sogenannten elektrochemischen Mahlen durch Si/C-Kompositpartikel mit größeren Partikeln ausgeprägter.

Vor diesem Hintergrund bestand die Aufgabe, nicht-aggregierte oder möglichst wenig aggregierte Präkompositpartikel bereitzustellen, mit denen durch thermische Behandlung bzw. Carbonisieren nicht-aggregierte oder möglichst wenig aggregierte Si-/C-Kompositpartikel zugänglich werden. Aufwändiges Abtrennen von Über- oder Unterkorn sollte möglichst vermieden werden.

Überraschenderweise wurde diese Aufgabe gelöst, indem Mischungen umfassend Sauerstoff-freie Polymere, Kohlenstoff enthaltende Additive und Siliciumpartikel sprühgetrocknet und die so erhaltenen Präkompositpartikel durch anschließende thermische Behandlung in Si/C-Kompositpartikel überführt wurden. Durch die erfindungsgemäße Merkmalskombination wurden Si/C-Kompositpartikel mit den für Lithiumionen-Batterien gewünschten Partikeldurchmessern und Partikelgrößenverteilungen zugänglich. Unerwarteter Weise können mit den erfindungsgemäßen Si/C-Kompositpartikeln Lithiumionen-Batterien mit höherer Coulomb-Effizienz oder einem geringeren initialen, irreversiblen Verlust an mobilem Lithium im ersten Lade-/Entladezyklus der Batterien erhalten werden.

Ein Gegenstand der Erfindung ist ein Verfahren zur Herstellung von Präkompositpartikeln, dadurch gekennzeichnet, dass Mischungen enthaltend Siliciumpartikel, ein oder mehrere Sauerstoff-freie Polymere, ein oder mehrere Kohlenstoff-Additive (C-Additive) basierend auf einer Kohlenstoffmodifikation und ein oder mehrere Dispergierflüssigkeiten mittels Sprühtrocknung getrocknet werden.

Ein weiterer Gegenstand der Erfindung sind die nach dem vorgenannten Verfahren erhältlichen Verfahrensprodukte (Präkompositpartikel).

Ein Präkompositpartikel ist allgemein ein Agglomerat von Siliciumpartikeln, C-Additiven und Sauerstoff-freien Polymeren. In Folge ihrer erfindungsgemäßen Herstellung sind die Siliciumpartikel und die C-Additive in den Präkompositpartikeln im Allgemeinen ganz oder teilweise von den Sauerstoff-freien Polymeren umhüllt. Die Oberfläche der Präkompositpartikel wird vorzugsweise ganz oder teilweise, besonders bevorzugt im Wesentlichen durch die Sauerstoff-freien Polymere gebildet. In Anbetracht dieser Strukturmerkmale war es umso überraschender, dass die erfindungsgemäßen Präkompositpartikel die erfindungsgemäße Aufgabe lösten - zumal die Sauerstoff-freien Polymere auch Bindemitteleigenschaften haben. Durch bloßes physikalisches Mischen von Siliciumpartikeln, Sauerstoff-freien Polymeren und C-Additiven oder durch nicht-erfindungsgemäßes Trocknen der erfindungsgemäßen Mischungen sind Präkompositpartikel mit erfindungsgemäßer Struktur, insbesondere mit der erfindungsgemäß erhaltenen Verteilung von Sauerstoff-freien Polymeren in den Präkompositpartikeln dagegen nicht erhältlich.

Die Sauerstoff-freien Polymere beinhalten in ihrer chemischen Summenformel allgemein keinen Sauerstoff. Sauerstoff-freie Polymere können beispielsweise vernetzte, verzweigte und insbesondere lineare Polymere sein, die keine Sauerstoff-haltigen funktionellen Gruppen tragen, wie Alkoxy- (z.B. Ether, Acetale), Hydroxy- (Alkohole), Oxo- (Ketone), Formyl- (Aldehyde), Carboxy- (Carbonsäuren), Metallcarboxylato- (Carbonsäuresalze), Alkyloxycarbonyl- (Ester), Halogenformyl- (Carbonsäurehalogenide), Carbamoyl- (Carbonsäureamide), Carbamat- (Urethane), Sulfonato- (Sulfonsäure), Metallsulfonato- (Sulfonsäuresalze), Anhydrid- oder Siloxan-Gruppen.

Beispiele für Sauerstoff-freie Polymere sind Polyacrylnitril; Polyolefine, wie Polyethylen, Ethylen-Propylen-Dien-Terpolymere; Polyvinylhalogenide, wie Polyvinylchlorid, Polyvinylidenchlorid, Polyvinylidenfluorid oder Polytetrafluorethylen; Polyvinylaromaten oder Polyaromaten, wie Polyanilin, Polystyrol, Polybenzimidazol, Polypyrrol, Poly-para-phenylen; polyaromatische Kohlenwasserstoffe, wie Peche oder Teere, insbesondere Mesogenes Pech, Mesophasen-Pech, Petrolpech, Steinkohlenteerpech. Bevorzugte Sauerstoff-freie Polymere sind Polyacrylnitril, Polyanilin und Polystyrol. Besonders bevorzugt ist Polyacrylnitril.

Die Sauerstoff-freien Polymere lassen sich allgemein durch thermische Behandlung in leitfähige Kohlenstoff-Strukturen überführen.

Die Präkompositpartikel basieren vorzugsweise zu ≤ 95 Gew.%, besonders bevorzugt ≤ 90 Gew.% und am meisten bevorzugt ≤ 85 Gew.% auf Sauerstoff-freien Polymeren. Die Präkompositpartikel basieren vorzugsweise zu ≥ 5 Gew.%, besonders bevorzugt ≥ 10 Gew.% und am meisten bevorzugt ≥ 15 Gew.% auf Sauerstoff-freien Polymeren. Die vorgenannten Angaben in Gew.% beziehen sich jeweils auf das Trockengewicht der Präkompositpartikel.

Bevorzugte C-Additive werden ausgewählt aus der Gruppe umfassend Graphit, (Leit-)Ruß, Aktivkohle, amorphen Kohlenstoff, pyrolytischen Kohlenstoff, Soft-Carbon, Hard-Carbon, Carbon Nanotubes (CNTs), Fullerene und Graphen. Besonders bevorzugte C-Additive sind Graphit, Leitruß und Aktivkohle.

Die Präkompositpartikel basieren vorzugsweise zu ≤ 90 Gew.%, besonders bevorzugt ≤ 85 Gew.% und am meisten bevorzugt ≤ 80 Gew.% auf C-Additiven. Die Präkompositpartikel basieren vorzugsweise zu ≥ 3 Gew.%, besonders bevorzugt ≥ 5 Gew.% und am meisten bevorzugt ≥ 7 Gew.% auf C-Additiven. Die vorgenannten Angaben in Gew.% beziehen sich jeweils auf das Trockengewicht der Präkompositpartikel.

Siliciumpartikel können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen. Bevorzugt wird elementares Silicium eingesetzt, insbesondere da dieses eine vorteilhaft hohe Speicherkapazität für Lithium-Ionen aufweist.

Unter elementarem Silicium ist im Allgemeinen hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids SiOx bevorzugt im Bereich 0 < x < 1,3. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung M_{y}Si bevorzugt im Bereich 0 < y < 5. Die Siliciumpartikel können gegebenenfalls prälithiiert sein. Für den Fall, dass die Siliciumpartikel mit Lithium legiert sind, liegt die Stöchiometrie der Legierung Li_{z}Si bevorzugt im Bereich 0 < z < 2,2.

Besonders bevorzugt sind Siliciumpartikel, die ≥ 80 Mol% Silicium und/oder ≤ 20 Mol% Fremdatome, ganz besonders bevorzugt ≤ 10 Mol% Fremdatome enthalten.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene. Durch die organischen Gruppen kann beispielsweise die Oberflächenspannung der Siliciumpartikel gesteuert werden. Diese kann so an die Lösemittel oder Bindemittel angepasst werden, die bei der Herstellung der Granulate oder bei der Herstellung der Elektrodenbeschichtungen eingesetzt werden.

Die Siliciumpartikel weisen vor der Sprühtrocknung volumengewichtete Partikelgrößenverteilungen mit Medianwerten des Durchmessers d₅₀ von vorzugsweise 50 nm bis 50 µm, besonders bevorzugt 100 nm bis 30 µm und am meisten bevorzugt 150 nm bis 20 µm auf.

Die volumengewichtete Partikelgrößenverteilung ist bestimmbar durch statische Laserstreuung unter Anwendung des Fraunhofer- oder des Mie-Modells mit dem Messgerät Horiba LA 950 mit Ethanol oder Isopropanol als Dispergiermedium für die Siliciumpartikel.

Die Siliciumpartikel sind vorzugsweise nicht agglomeriert, insbesondere nicht aggregiert.

Aggregiert bedeutet, dass sphärische oder weitestgehend sphärische Primärpartikel, wie sie beispielsweise zunächst in Gasphasenprozessen zur Herstellung von Siliciumpartikeln gebildet werden, im weiteren Reaktionsverlauf des Gasphasenprozesses zusammenwachsen und auf dies Weise Aggregate bilden. Diese Aggregate können im weiteren Reaktionsverlauf Agglomerate bilden. Agglomerate sind eine Zusammenballung von Primärpartikeln oder Aggregaten ohne kovalente chemische Bindungen. Agglomerate können in manchen Fällen mit Knet- und Dispergierverfahren wieder in die Aggregate aufgespalten werden, häufig ist dieses jedoch nicht möglich. Aggregate lassen sich mit diesen Verfahren nicht oder nur teilweise in die Primärpartikel zerlegen. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen können dagegen nicht zwischen Aggregaten oder Agglomeraten unterscheiden.

Die Siliciumpartikel haben eine Sphärizität von vorzugsweise 0,3 ≤ ψ ≤ 1, besonders bevorzugt 0,4 ≤ ψ ≤ 1 und am meisten bevorzugt 0,5 ≤ ψ ≤ 1. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Siliciumpartikel haben vorzugsweise bestimmte Schüttguteigenschaften. Schüttguteigenschaften sind beispielsweise in der internationalen Norm FEM 2.581 der "Federation Europeenne de la Manutention" beschrieben. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben sind zum Beispiel Kornform und Korngrößenverteilung (FEM 2.581 / FEM 2.582: General characteristics of bulk products with regard to their classification and their symbolization).

Nach DIN ISO 3435 können Schüttgüter in Abhängigkeit der Beschaffenheit der Kornkanten in sechs unterschiedliche Kornformen untergliedert werden:
I: scharfe Kanten mit ungefähr gleichen Ausmaßen in den drei Dimensionen (Bsp.: Würfel);
II: scharfe Kanten, deren eine deutlich länger ist als die anderen beiden (Bsp.: Prisma, Klinge);
III: scharfe Kanten, deren eine deutlich kleiner ist als die beiden anderen (Bsp.: Platte, Schuppen);
IV: runde Kanten mit ungefähr gleichen Ausmaßen in den drei Dimensionen (Bsp.: Kugel);
V: runde Kanten, in einer Richtung deutlich größer als in den anderen beiden (Bsp.: Zylinder, Stange);
VI: faserig, fadenförmig, lockenförmig, verschlungen.

Die Siliciumpartikel haben vorzugsweise Kornformen I bis VI, mehr bevorzugt I, II, III oder IV und besonders bevorzugt I oder IV gemäß DIN ISO 3435.

Die Präkompositpartikel basieren vorzugsweise zu ≤ 50 Gew.%, besonders bevorzugt ≤ 45 Gew.% und am meisten bevorzugt ≤ 40 Gew.% auf Siliciumpartikeln. Die Präkompositpartikel basieren vorzugsweise zu ≥ 2 Gew.%, besonders bevorzugt ≥ 5 Gew.% und am meisten bevorzugt ≥ 7 Gew.% auf Siliciumpartikeln. Die vorgenannten Angaben in Gew.% beziehen sich jeweils auf das Trockengewicht der Präkompositpartikel.

Die Siliciumpartikel können beispielsweise mittels Gasphasenabscheidung oder vorzugsweise durch Mahlprozesse hergestellt werden.

Als Mahlprozesse kommen Trocken- oder Nassmahlprozesse in Betracht. Hierbei werden vorzugsweise Strahlmühlen, wie Gegenstrahlmühlen, oder Prallmühlen, Planetenkugelmühlen oder Rührwerkskugelmühlen eingesetzt. Die Strahlmühlen weisen bevorzugt einen integrierten Windsichter auf, der statisch oder dynamisch ausgebildet sein kann, oder sie werden im Kreislauf mit einem externen Windsichter betrieben.

Die Nassmahlung erfolgt im Allgemeinen in einer Suspension mit organischen oder anorganischen Dispergiermedien. Bevorzugte Dispergiermedien sind die weiter unten beschriebenen Dispergierflüssigkeiten.

Bei der Nassmahlung werden vorzugsweise Mahlkörper verwendet, deren mittlerer Durchmesser 10 bis 1000 mal größer ist als der 90%-Perzentilwert d₉₀ des Durchmessers des eingesetzten Mahlguts, bezogen auf die Partikelgrößenvolumenverteilung. Besonders bevorzugt sind Mahlkörper, deren mittlerer Durchmesser 20 bis 200-mal größer ist als der d₉₀-Wert der Ausgangsverteilung des Mahlguts.

Als Dispergierflüssigkeit können organische und/oder anorganische Lösungsmittel eingesetzt werden. Es können auch Mischungen aus zwei oder mehr Dispergierflüssigkeiten eingesetzt werden.

Ein Beispiel für ein anorganisches Lösungsmittel ist Wasser.

Organische Lösungsmittel sind beispielsweise Kohlenwasserstoffe, Ether, Ester, Stickstoff-funktionelle Lösungsmittel, Schwefel-funktionelle Lösungsmittel oder Alkohole. Die organischen Lösungsmittel enthalten vorzugsweise 1 bis 12 Kohlenstoffatome und besonders bevorzugt 1 bis 8 Kohlenstoffatome. Beispiele für Alkohole sind Methanol, Ethanol, Propanol, Butanol und Benzylalkohol. Kohlenwasserstoffe können beispielsweise aliphatisch oder aromatisch, substituiert oder unsubstituiert sein. Beispiele hierfür sind chlorierte Kohlenwasserstoffe, wie Dichlormethan, Trichlormethan, Tetrachlormethan, 1,2-Dichlorethan und Trichlorethylen; unsubstituierte Kohlenwasserstoffe, wie Pentan, n-Hexan, Hexan-Isomerengemische, Heptan, Oktan, Waschbenzin, Petrolether, Benzol, Toluol und Xylole. Beispiele für Ether sind Dioxan, Tetrahydrofuran, Diethylether, Di-isopropylether und Diethylenglycoldimethylether. Beispiele für Ester sind Ethylacetat, Butylacetat, Propylpropionat, Ethylbutyrat und Ethyl-isobutyrat. Beispiele für Stickstoff-funktionelle Lösungsmittel sind Nitrobenzol, Dimethylformamid, N-Methyl-2-Pyrrolidon und N-Ethyl-2-Pyrrolidon. Ein Beispiel für ein Schwefel-funktionelles Lösungsmittel ist Dimethylsulfoxid. Bevorzugte Lösungsmittel sind Ethanol und 2-Propanol, Dimethylformamid, N-Methyl-2-Pyrrolidon, N-Ethyl-2-Pyrrolidon, Dimethylsulfoxid oder Gemische dieser Lösungsmittel.

Die Dispergierflüssigkeit liegt im Allgemeinen bei Raumtemperatur in flüssiger Form vor und hat bei 20°C eine Viskosität von vorzugsweise ≤ 100 mPas und besonders bevorzugt ≤ 10 mPas. Die Dispergierflüssigkeit ist bevorzugt inert oder schwach reaktiv gegenüber Silicium.

Die Mischungen, die zur Sprühtrocknung eingesetzt werden, enthalten vorzugsweise ≥ 5 Gew.%, besonders bevorzugt ≥ 10 Gew.% und am meisten bevorzugt ≥ 20 Gew.% an Dispergierflüssigkeit. Die Mischungen enthalten vorzugsweise ≤ 99 Gew.%, besonders bevorzugt ≤ 98,5 Gew.% und am meisten bevorzugt ≤ 98 Gew.% an Dispergierflüssigkeit. Die vorgenannten Angaben in Gew.% beziehen sich jeweils auf das Trockengewicht der Mischungen, die zur Sprühtrocknung eingesetzt werden.

Die Mischungen können ein oder mehrere Zusatzstoffe enthalten. Beispiele hierfür sind inaktive Materialien auf Basis von Metallen (wie Kupfer, Zirkonium), Oxiden, Carbiden oder Nitriden.

Die Präkompositpartikel basieren vorzugsweise zu 0 bis 30 Gew.%, besonders bevorzugt 1 bis 25 Gew.% und am meisten bevorzugt 2 bis 20 Gew.% auf Zusatzstoffen, bezogen auf das Trockengewicht der Präkompositpartikel. In einer bevorzugten, alternativen Ausführungsform enthalten die Präkompositpartikel keine Zusatzstoffe.

Die Mischungen können auch ein oder mehrere Additive enthalten, wie beispielsweise Porenbildner, Verlaufsmittel, Dotiermittel oder Stoffe, die die elektrochemische Stabilität der Elektrode in der Batterie verbessern. Bevorzugte Additive sind Porenbildner. Es können gängige Porenbildner eingesetzt werden.

Die Präkompositpartikel basieren vorzugsweise zu 0 bis 50 Gew.%, besonders bevorzugt 1 bis 40 Gew.% und am meisten bevorzugt 2 bis 30 Gew.% auf Additiven, bezogen auf das Trockengewicht der Präkompositpartikel. In einer bevorzugten, alternativen Ausführungsform enthalten die Präkompositpartikel keine Additive.

Die Präkompositpartikel fallen vorzugsweise in Form von isolierten Partikeln oder lockeren Agglomeraten von Präkompositpartikeln an, jedoch im Allgemeinen nicht in Form von Aggregaten von Präkompositpartikeln. Etwaige Agglomerate von Präkompositpartikeln lassen sich in die einzelnen Präkompositpartikel separieren, beispielsweise mit Knet- oder Dispergierverfahren. Aggregate von Präkompositpartikeln lassen sich auf diese Weise nicht in die einzelnen Partikel trennen, ohne Präkompositpartikel zu zerstören.

Die Präkompositpartikel sind bevorzugt sphärisch, können aber auch eine Splitterform aufweisen oder in Form von hohlen Sphären vorliegen, wobei massive sphärische Partikel besonders bevorzugt sind.

Die Präkompositpartikel haben eine Sphärizität von vorzugsweise 0,3 ≤ ψ ≤ 1, besonders bevorzugt 0,5 ≤ ψ ≤ 1 und am meisten bevorzugt 0,8 ≤ ψ ≤ 1. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die volumengewichtete Partikelgrößenverteilung mit Durchmesser-Perzentilen d₅₀ der Präkompositpartikel ist vorzugsweise ≤ 100 µm, besonders bevorzugt ≤ 50 µm und am meisten bevorzugt ≤ 20 µm, aber vorzugsweise ≥ 1 µm.

Die Partikelgrößenverteilung der Präkompositpartikel kann bimodal oder polymodal sein und ist bevorzugt monomodal, besonders bevorzugt schmal. Die volumengewichtete Partikelgrößenverteilung der Präkompositpartikel hat eine Breite (d₉₀-d₁₀)/d₅₀ von bevorzugt ≤ 1,5, besonders bevorzugt ≤ 1 und am meisten bevorzugt ≤ 0,9.

Die Bestimmung der volumengewichteten Partikelgrößenverteilung der Präkompositpartikel erfolgte durch statische Laserstreuung unter Anwendung des Mie-Modells mit dem Messgerät Horiba LA 950 mit Ethanol als Dispergiermedium für die Präkompositpartikel.

Die Präkompositpartikel weisen typischerweise BET-Oberflächen auf von bevorzugt 1 bis 300 m²/g, besonders bevorzugt 2 bis 250 m²/g und am meisten bevorzugt 5 bis 200 m²/g (Bestimmung nach DIN ISO 9277:2003-05).

Die Mischungen, die zur Sprühtrocknung eingesetzt werden, können durch beliebiges Mischen ihrer einzelnen Bestandteile hergestellt werden. Das Mischen ist an keine besondere Vorgehensweise gebunden. Die Sauerstoff-freien Polymere, die C-Additive und die Siliciumpartikel können gemeinsam oder nacheinander mit Dispergierflüssigkeit gemischt werden. Vorzugsweise werden zunächst Sauerstoff-freie Polymere mit Dispergierflüssigkeit gemischt und anschließend werden gemeinsam oder separat, gleichzeitig oder nacheinander C-Additive und Siliciumpartikel zugegeben.

Die Sauerstoff-freien Polymere sind in den Dispergierflüssigkeiten vorzugsweise gelöst. Vorzugsweise lassen sich bei 20°C in 100 mL Dispergierflüssigkeit mindestens 1 g Sauerstoff-freie Polymere lösen. Die Siliciumpartikel und die C-Additive sind üblicherweise in den Dispergierflüssigkeiten dispergiert.

Das Mischen kann in gängigen Mischvorrichtungen durchgeführt werden, wie beispielsweise in Rotor-Stator-Maschinen, Hochenergiemühlen, Planetenmischer, Kneter, Magnetrührer, Rührwerkskugelmühlen, Rüttelplatten, Dissolvern, Ultraturrax, Rollbänken oder Ultraschallgeräten. Ultraschall kann auch Anwendung finden.

Die Sprühtrocknung kann in hierfür gängigen Anlagen und unter an sich gängigen Bedingungen durchgeführt werden. Die Zerstäubung in Sprühtrocknungsanlagen kann beispielsweise mittels Ein-, Zwei- oder Mehrstoffdüsen oder mit einer rotierenden Scheibe erfolgen. Die Eintrittstemperatur der zu trocknenden Mischung in die Sprühtrocknungsanlage ist vorzugsweise größer oder gleich der Siedetemperatur der zu trocknenden Mischung und besonders bevorzugt um ≥ 10°C höher als die Siedetemperatur der zu trocknenden Mischung. Beispielsweise beträgt die Eintrittstemperatur vorzugsweise 80°C bis 220°C, besonders bevorzugt 100°C bis 180°C. Die Austrittstemperatur ist vorzugsweise ≥ 30°C, besonders bevorzugt ≥ 40°C und am meisten bevorzugt ≥ 50°C. Im Allgemeinen liegt die Austrittstemperatur im Bereich von 30°C bis 100°C, bevorzugt von 45°C bis 90°C. Der Druck in der Sprühtrocknungsanlage ist bevorzugt der Umgebungsdruck.

Die Trocknung kann in Umgebungsluft, synthetischer Luft oder vorzugsweise in einer Inertgasatmosphäre, beispielsweise in Stickstoff- oder Argon-Atmosphäre erfolgen. Insbesondere bei Verwendung organischer Lösungsmittel als Dispergierflüssigkeit ist der Einsatz von Inertgas bevorzugt.

In der Sprühtrocknungsanlage haben die versprühten Mischungen Primärtröpfchengrößen von vorzugsweise 1 bis 100 µm, besonders bevorzugt 2 bis 50 µm und am meisten bevorzugt 5 bis 20 µm.

Über die Einstellungen der Inlet-Temperatur, des Gasflusses (Flow), sowie der Pumprate (Feed), die Wahl der Düse, des Aspirators, die Wahl der Dispergierflüssigkeit oder auch der Feststoffkonzentration der Sprühdispersion lassen sich die Größe der Primärpartikel, Restfeuchte im Produkt und die Ausbeute des Produkts in an sich bekannter Weise einstellen. Beispielsweise werden bei höherer Feststoffkonzentration der Sprühsuspension Primärpartikel mit größeren Partikelgrößen erhalten. Auch der Gasfluss hat Einfluss auf die Partikelgröße. Für feine Partikel werden vorzugsweise hohe und für größere Partikel vorzugsweise niedrige Gasflüsse eingesetzt. Der Gasfluss beträgt vorzugsweise 84 bis 820 L/h, besonders bevorzugt 350 bis 600 L/h. Die Gasströme können über einen Aspirator umgewirbelt und somit im Kreis gefahren werden. Der Aspirator kann beispielsweise auf 0 bis 35 m³/h eingestellt werden, wobei eine Umwirbelung von 20 bis 35 m³/h bevorzugt ist.

Die durch Sprühtrocknung erhaltenen Präkompositpartikel können auf unterschiedliche, gängige Weise aus dem Gasstrom abgetrennt werden, beispielsweise über Filter, Klassierungsverfahren, wie Sichten, oder bevorzugt Zyklone.

Die Präkompositpartikel können zur Entfernung von Restfeuchte gegebenenfalls weiter getrocknet oder direkt weiterverwertet werden.

Ein weiterer Gegenstand der Erfindung ist ein Verfahren zur Herstellung von Si/C-Kompositpartikeln, dadurch gekennzeichnet, dass
Mischungen enthaltend Siliciumpartikel, ein oder mehrere Sauerstoff-freie Polymere, ein oder mehrere C-Additive basierend auf einer Kohlenstoffmodifikation und ein oder mehrere Dispergierflüssigkeiten mittels Sprühtrocknung getrocknet werden und die so erhaltenen Präkompositpartikel thermisch behandelt werden.

Ein weiterer Gegenstand der Erfindung sind die nach dem vorgenannten Verfahren erhältlichen Si/C-Kompositpartikel.

Durch die thermische Behandlung werden die Präkompositpartikel in Si/C-Kompositpartikel überführt. Durch die thermische Behandlung der Präkomposite erfolgt im Allgemeinen eine Carbonisierung der Sauerstoff-freien Polymere. Die Sauerstoff-freien Polymere werden dabei vorzugsweise in anorganischen Kohlenstoff überführt. Die Kohlenstoffausbeuten beim Carbonisieren der Sauerstoff-freien Polymere betragen vorzugsweise ≥ 15%, besonders bevorzugt ≥ 20% und am meisten bevorzugt ≥ 25%, bezogen auf das Gesamtgewicht der Sauerstoff-freien Polymere. Der Kohlenstoff in den Si/C-Kompositpartikeln kann kristallin oder amorph vorliegen sowie Mischungen aus kristallinen und amorphen Bestandteilen enthalten.

Auf Grund der erfindungsgemäßen Herstellung der Si/C-Kompositpartikel sind darin die Siliciumpartikel und die C-Additive im Allgemeinen ganz oder teilweise in Kohlenstoff eingebettet. Die Oberfläche der Si/C-Kompositpartikel besteht vorzugsweise ganz oder teilweise, besonders bevorzugt im Wesentlichen aus Kohlenstoff. Durch bloßes physikalisches Mischen von Siliciumpartikeln, Sauerstoff-freien Polymeren und C-Additiven und anschließendes Carbonisieren oder durch nicht-erfindungsgemäßes Trocknen der erfindungsgemäßen Mischungen und anschließendes Carbonisieren sind Si/C-Kompositpartikel mit erfindungsgemäßer Struktur, insbesondere mit der erfindungsgemäß erhaltenen Verteilung von Kohlenstoff in den Si/C-Kompositpartikeln dagegen nicht erhältlich.

Die Si/C-Kompositpartikel fallen vorzugsweise in Form von isolierten Partikeln oder lockeren Agglomeraten von Si/C-Kompositpartikel an, jedoch im Allgemeinen nicht in Form von Aggregaten von Si/C-Kompositpartikeln. Etwaige Agglomerate von Si/C-Kompositpartikeln lassen sich in die einzelnen Si/C-Kompositpartikel separieren, beispielsweise durch Knet- oder Dispergierverfahren. Aggregate von Si/C-Kompositpartikeln lassen sich auf diese Weise nicht in die einzelnen Partikel trennen, ohne Si/C-Kompositpartikel zu zerstören.

Erfindungsgemäße Si/C-Kompositpartikel führen im Vergleich zu analogen Si/C-Kompositpartikeln, zu deren Herstellung Sauerstoff-haltige Polymere eingesetzt wurden, zu Lithiumionen-Batterien mit höherer Coulomb-Effizienz oder einem geringeren initialen, irreversiblen Verlust an mobilem Lithium im ersten Lade-/Entladezyklus der Batterien. Folglich unterscheiden sich die erfindungsgemäßen Si/C-Kompositpartikel von solchen herkömmlichen Si/C-Kompositpartikeln zwangsläufig strukturell.

Die Si/C-Kompositpartikel sind bevorzugt sphärisch, können aber auch eine Splitterform aufweisen oder in Form von hohlen Sphären vorliegen, wobei massive sphärische Partikel besonders bevorzugt sind.

Die Si/C-Kompositpartikel haben eine Sphärizität von vorzugsweise 0,3 ≤ ψ ≤ 1, besonders bevorzugt 0,5 ≤ ψ ≤ 1 und am meisten bevorzugt 0,8 ≤ ψ ≤ 1. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Si/C-Kompositpartikel haben volumengewichtete Partikelgrößenverteilungen mit Durchmesser-Perzentilen d₅₀ von vorzugsweise ≥ 1 µm, besonders bevorzugt ≥ 3 µm und am meisten bevorzugt ≥ 6 µm.Die Si/C-Kompositpartikel haben d₅₀-Werte von vorzugsweise ≤ 100 µm, mehr bevorzugt ≤ 50 µm, besonders bevorzugt ≤ 36 µm und am meisten bevorzugt ≤ 20 µm.

Die Partikelgrößenverteilung der Si/C-Kompositpartikel kann bimodal oder polymodal sein und ist bevorzugt monomodal, besonders bevorzugt schmal. Die volumengewichtete Partikelgrößenverteilung der Si/C-Kompositpartikel hat eine Breite (d₉₀-d₁₀)/d₅₀ von bevorzugt ≤ 1,5, mehr bevorzugt ≤ 1,2, besonders bevorzugt ≤ 1 und am meisten bevorzugt ≤ 0,9.

Die Bestimmung der volumengewichteten Partikelgrößenverteilung der Si/C-Kompositpartikel erfolgte durch statische Laserstreuung unter Anwendung des Mie-Modells mit dem Messgerät Horiba LA 950 mit Ethanol als Dispergiermedium für die Si/C-Kompositpartikel.

Die Si/C-Kompositpartikel sind vorzugsweise porös. Die Si/C-Kompositpartikel enthalten Poren mit Durchmessern von vorzugsweise ≥ 60 nm besonders bevorzugt ≥ 100 nm und am meisten bevorzugt ≥ 200 nm. Die Poren haben Durchmesser von vorzugsweise ≤ 1400 nm, besonders bevorzugt ≤ 700 nm und am meisten bevorzugt ≤ 400 nm (Bestimmungsmethode: Raster-Elektronen-Mikroskopie (REM)).

Besonders bevorzugt befinden sich Siliciumpartikel in Poren. Der Anteil der Siliciumpartikel, die sich in Poren befinden, beträgt vorzugsweise ≥ 5%, besonders bevorzugt ≥ 20% und am meisten bevorzugt ≥ 50%, bezogen auf die Gesamtzahl der Siliciumpartikel in den Si/C-Kompositpartikeln (Bestimmungsmethode: Raster-Elektronen-Mikroskopie (REM)).

Die Si/C-Kompositpartikel basieren zu vorzugsweise 5 bis 50 Gew-%, besonders bevorzugt 10 bis 40 Gew-%, am meisten bevorzugt 20 bis 40 Gew-% auf Silicium; vorzugsweise 50 bis 95 Gew-%, besonders bevorzugt 60 bis 85 Gew-%, am meisten bevorzugt 60 bis 80 Gew-% Kohlenstoff. Weiterhin können Sauerstoff-Gehalte von beispielsweise ≤ 20 Gew-%, bevorzugt ≤ 10 Gew-% und besonders bevorzugt ≤ 5 Gew-% enthalten sein, beispielsweise in Form einer nativen SiO₂-Schicht auf den Siliciumpartikeln. Gewisse Mengen an Stickstoff in den Si/C-Kompositpartikeln sind vorteilhaft und betragen beispielsweise 0,5 bis 10 Gew-% und besonders bevorzugt zwischen 2 bis 5 Gew-%. Stickstoff liegt hierbei vorzugsweise chemisch gebunden in Form von Heterocyclen vor, beispielsweise als Pyridin- oder Pyrrol-Einheiten (N). Neben den genannten Hauptbestandteilen können auch weitere chemische Elemente in Form eines gezielten Zusatzes oder zufälliger Verunreinigung enthalten sein: wie beispielsweise Li, Fe, Al, Cu, Ca, K, Na, S, Cl, Zr, Ti, Pt, Ni, Cr, Sn, Mg, Ag, Co, Zn, B, P, Sb, Pb, Ge, Bi, Seltene Erden; deren Gehalte sind bevorzugt ≤ 1 Gew.-% und besonders bevorzugt ≤ 100 ppm. Die vorgenannten Angaben in Gew.% beziehen sich jeweils auf das Gesamtgewicht der Si/C-Kompositpartikel.

Durch die Polymere, die bei der thermischen Behandlung der Präkompositpartikel in anorganischen Kohlenstoff überführt werden, werden bevorzugt ≤ 3 Gew.-% Sauerstoff, besonders bevorzugt ≤ 2 Gew.-% Sauerstoff und am meisten bevorzugt ≤ 1 Gew.-% Sauerstoff in die Si/C-Kompositpartikel eingebracht, bezogen auf das Gesamtgewicht der Si/C-Kompositpartikel. Die Polymere, die bei der thermischen Behandlung der Präkompositpartikel in anorganischen Kohlenstoff überführt werden, sind vorzugsweise die Sauerstoff-freien Polymere. Durch den Einsatz von Sauerstoff-freien Polymeren wird die Menge an zusätzlichem, über das Polymer eingebrachtem Sauerstoff minimal.

Die thermische Behandlung der Präkompositpartikel erfolgt bei Temperaturen von vorzugsweise 400 bis 1400°C, besonders bevorzugt 700 bis 1200°C und am meisten bevorzugt 900 bis 1100°C.

Die thermische Behandlung kann beispielsweise in einem Rohrofen, Drehrohrofen oder einem Wirbelschichtreaktor stattfinden.

Durch Wahl des Reaktortyps kann die Carbonisierung statisch oder unter ständiger Durchmischung des Reaktionsmediums durchgeführt werden.

Die thermische Behandlung kann unter aeroben oder anaeroben Bedingungen stattfinden. Beispielsweise kann eine erste thermische Behandlung bei Temperaturen bis 300°C unter Sauerstoffhaltiger Atmosphäre und eine zweite thermische Behandlung bei Temperaturen > 300°C unter Inertgas-Atmosphäre durchgeführt werden. Die thermische Behandlung wird vorzugsweise in einer Inertgas-Atmosphäre, wie Stickstoff- oder vorzugsweise Argon-Atmosphäre, durchgeführt. Die Inertgas-Atmosphäre kann gegebenenfalls zusätzlich Anteile eines reduzierenden Gases, wie Wasserstoff, enthalten. Die thermische Behandlung erfolgt vorzugsweise anaerob. Die Inertgas-Atmosphäre kann sich statisch über dem Reaktionsmedium befinden oder in Form eines Gasflusses über die Reaktionsmischung strömen. Die Flussraten betragen hierbei vorzugsweise bis zu 1 Liter pro Minute, besonders bevorzugt 100 bis 600 mL/min und am meisten bevorzugt 200 bis 250 mL/min, insbesondere im Falle der Carbonisierung von 2 bis 150 g Präkompositpartikel oder einem Reaktorvolumen von 7000 bis 11000 cm³. Die Heizraten beim Aufheizen der Reaktionsmischung betragen vorzugsweise 1 bis 20°C pro Minute, mehr bevorzugt 1 bis 15°C/min, besonders bevorzugt 1 bis 10°C/min und am meisten bevorzugt 3 bis 5°C/min. Weiterhin ist auch ein stufenweiser Prozess mit verschiedenen Zwischentemperaturen und -heizraten möglich. Nach Erreichen der Zieltemperatur wird die Reaktionsmischung üblicherweise eine gewisse Zeit bei der Temperatur getempert oder anschließend sogleich abgekühlt. Vorteilhaft sind Haltedauern von beispielsweise 30 min bis 24 h, bevorzugt 1 bis 10 h und besonders bevorzugt 2 bis 3 h. Das Abkühlen kann aktiv oder passiv, gleichmäßig oder stufenweise durchgeführt werden.

Die so erhaltenen Si/C-Kompositpartikel können unmittelbar ihrer weiteren Verwertung zugeführt werden, oder alternativ zuerst mechanisch, beispielsweise durch Mahlung oder Siebung, nachbehandelt oder durch Klassierungstechniken (Sieben, Sichten) von Über- oder Unterkorn befreit werden. Vorzugsweise unterbleiben mechanische Nachbehandlungen oder Klassierung, insbesondere unterbleibt ein Mahlen, Sieben oder Sichten.

Die Si/C-Kompositpartikel können zur Herstellung von Elektrodenmaterialien eingesetzt werden. Alternativ kann auch zuerst die Oberfläche der Si/C-Kompositpartikel modifiziert werden, beispielsweise durch Aufbringen einer oder mehrerer Beschichtungen, insbesondere einer Kohlenstoffbeschichtung. Anschließend können auch so modifizierte Si/C-Kompositpartikel zur Herstellung von Elektrodenmaterialien eingesetzt werden.

Ein weiterer Gegenstand der vorliegenden Erfindung ist die Verwendung der Si/C-Kompositpartikel in Elektrodenmaterialien für Lithiumionen-Batterien, insbesondere zur Herstellung der negativen Elektroden von Lithiumionen-Batterien.

Die Si/C-Kompositpartikel können als Silicium-Komponente für Elektrodenmaterialien von Lithiumionen-Batterien eingesetzt werden. Die Herstellung entsprechender Lithiumionen-Batterien kann beispielsweise erfolgen, wie in der WO 2015/117838 beschrieben.

Überraschenderweise können durch die erfindungsgemäße Vorgehensweise Si/C-Kompositpartikel mit der gewünschten Partikelgröße und der gewünschten engen Partikelgrößenverteilung erhalten werden. Auf diese Weise sind sphärische, mikroskalige, nicht-aggregierte beziehungsweise nicht versinterte Si/C-Kompositpartikel zugänglich. Aufwändiges Abtrennen von Über- oder Unterkorn kann somit entfallen. Vorteilhafterweise können auf diese Weise auch poröse Si/C-Kompositpartikel erhalten werden, deren Poren die Volumenänderung von Silicium im Zuge des Be-/Entladens von Lithiumionen-Batterien abzupuffern vermögen. Die Si/C-Kompositpartikel lassen sich vorteilhaft zu Anodenaktivmaterialien für Lithium-Ionen-Batterien weiterverarbeiten. Unerwarteter Weise können mit den erfindungsgemäßen Si/C-Kompositpartikeln Lithiumionen-Batterien mit höherer Coulomb-Effizienz oder einem geringeren initialen, irreversiblen Verlust an mobilem Lithium im ersten Lade-/Entladezyklus der Batterien erhalten werden. Die Partikelstruktur und die Partikelgröße der Si/C-Kompositpartikel sind entscheidend für deren Verarbeitung und elektrochemische Performance in Anodenaktivmaterialien von Lithiumionen-Batterien.

Die nachfolgenden Beispiele dienen zur weiteren Erläuterung der Erfindung.

Folgende analytische Methoden und Geräte wurden zur Charakterisierung der erhaltenen Si/C-Komposite eingesetzt:

### Rasterelektronemikroskopie (REM/EDX):

Die mikroskopischen Untersuchungen wurden mit einem Rasterelektronemikroskop Zeiss Ultra 55 und einem energiedispersivem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft. Die in den Figuren gezeigten Querschnitte der Si/C-Kompositpartikel wurden mit einem Ionencutter Leica TIC 3X bei 6 kV erzeugt.

### Anorganische Analytik / Elementaranalyse:

Die in den Beispielen angegebenen C-Gehalte wurden mit einem Leco CS 230 Analysator ermittelt, zur Bestimmung von O- und gegebenenfalls N- bzw. H-Gehalten wurde ein Leco TCH-600 Analysator eingesetzt. Die qualitative und quantitative Bestimmung von anderen angebenen Elementen in den Si/C-Kompositpartikeln wurden mittels ICP (inductively coupled plasma)-Emissionspektrometrie (Optima 7300 DV, Fa. Perkin Elmer) bestimmt. Die Proben wurden dazu in einer Mikrowelle (Microwave 3000, Fa. Anton Paar) sauer aufgeschlossen (HF/HNO₃). Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird.

### Partikelgrößenbestimmung:

Die Bestimmung der Partikelgrößenverteilung erfolgte im Rahmen dieser Erfindung nach ISO 13320 mittels statischer Laserstreuung mit einem Horiba LA 950. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Hierzu wurden die Si/C-Kompositpartikel in Ethanol dispergiert, und die Dispersion wurde vor der Messung 4 min in einem Hielscher Ultraschall-Laborgerät Modell UIS250v mit Sonotrode LS24d5 mit 250 W Ultraschall behandelt.

### Vergleichsbeispiel 1:

### Sprühtrocknung von PAN: Bildung von aggregierten PAN-Fasern:

12,5 g Polyacrylnitril (PAN) wurden bei Raumtemperatur in 500 ml Dimethylformamid (DMF) gelöst. Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ∼40; Aspirator 100%; Pumpe 20%).

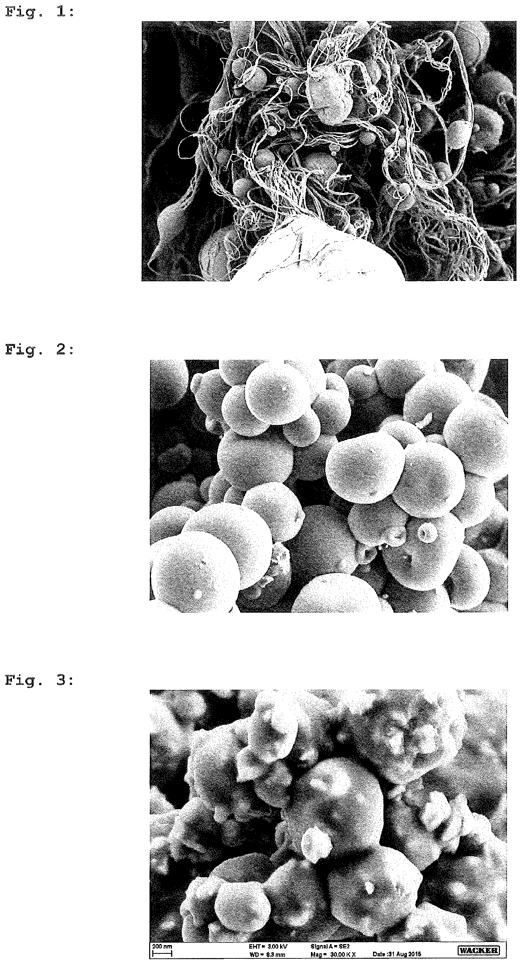

Fig. 1 zeigt das REM-Bild des so erhaltenen Pulvers (2.500fache Vergrößerung). Das Produkt war farblos und bestand aus faserigen Knäueln aus nanoskaligen PAN-Fasern sowie einzelnen unförmigen PAN-Kugeln.

### Vergleichsbeispiel 2:

### Sprühtrocknung von PAN und Herstellung von aggregierten C-Partikeln:

1,5 g Polyacrylnitril (PAN) wurden bei Raumtemperatur in 100 ml Dimethylformamid (DMF) gelöst. Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ∼30; Aspirator 100%; Pumpe 20%). Es wurde ein farbloses Pulver erhalten.

Von diesem Pulver wurden 647 mg in ein Quarzglasschiffchen (QCS GmbH) gegeben und in einem Drei-Zonen-Rohrofen (TFZ 12/65/550/ E301; Carbolite GmbH) unter Verwendung einer Kaskadenregelung inklusive eines Probenelements Typ N mit Argon/H₂ als Inertgas carbonisiert: Zuerst Heizrate 10 °C/min, Temperatur 300 °C, Haltedauer 90 min, Ar/H₂-Flussrate 200 ml/min; danach direkt weiter mit Heizrate 10 °C/min, Temperatur 1000 °C, Haltedauer 3 h, Ar/H₂-Flussrate 200 ml/min. Nach dem Abkühlen wurden 173 mg eines schwarzen Pulvers erhalten (Ausbeute 27%).

Das REM-Bild (7.500fache Vergrößerung) des Produkts in Fig. 2 zeigt C-Partikel, die in Form von aggregierten, mikroskaligen Kugeln vorliegen.

### Vergleichsbeispiel 3:

### Herstellung von aggregierten Si/C-Kompositpartikeln:

12,0 g Polyacrylnitril (PAN) wurden bei Raumtemperatur in 800 ml Dimethylformamid (DMF) gelöst. In dieser PAN-Lösung wurden 8,6 g einer Silicium-Nanopulver-Suspension (20,3ig% in Ethanol; entspricht 1,75 g Silicium) mittels Ultraschall dispergiert (Hielscher UIS250V; Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ∼30; Aspirator 100%; Pumpe 20%). Es wurden 11,1 g eines braunen Pulvers erhalten (80% Ausbeute).
10,6 g des so erhaltenen Si/PAN-Präkomposits wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Inertgas carbonisiert: Zuerst Heizrate 10 °C/min, Temperatur 300 °C, Haltedauer 90 min, Ar/H₂-Flussrate
200 ml/min; danach direkt weiter mit Heizrate 10 °C/min, Temperatur 1000 °C, Haltedauer 3 h, Ar/H2-Flussrate 200 ml/min. Nach Abkühlen wurde ein schwarzes Pulver erhalten (Ausbeute 42%).

Das REM-Bild (30.000 fache Vergrößerung) des Produkts in Fig. 3 zeigt Kompositpartikel, die in Form von aggregierten, mikroskaligen Kohlenstoff-Kugeln vorliegen und im Inneren Nano-Si-Partikel beinhalten.

Elementare Zusammensetzung: Si 28 Gew-%; C 62,4 Gew.-%; O 5,82 Gew-%; N 3,63 Gew-%; B <50 ppm; P <50 ppm; Al <50 ppm; Ca <50 ppm; Cu <25 ppm; K <50 ppm; Li<10 ppm; Zr 1300 ppm. Partikelgrößenverteilung: Monomodal; D₁₀: 5,36 µm, D₅₀= 9,69 µm, D90: 16,4 µm; (D₉₀-D₁₀)/D₅₀ = 1,14.

### Beispiel 4:

### Nicht-aggregierte Si/C-Kompositpartikel:

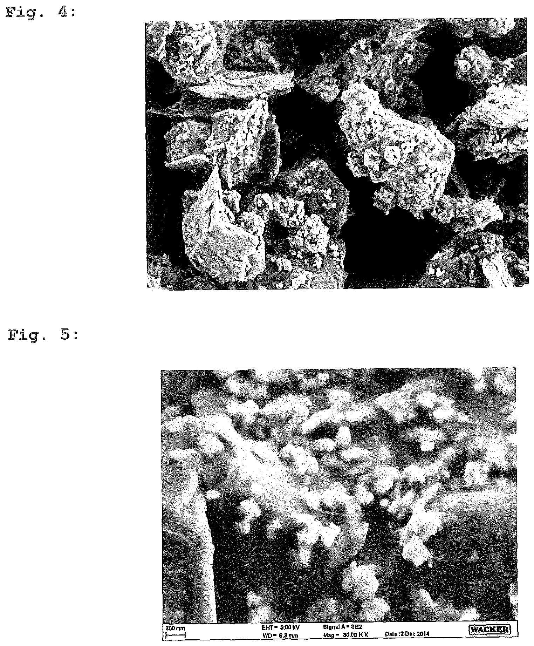

20,0 g Polyacrylnitril (PAN) wurden bei Raumtemperatur in 1380 ml Dimethylformamid (DMF) gelöst. 25,0 g einer Silicium-Nanopulver-Suspension (21% in Ethanol; entspricht 5 g Nano-Si) und 11,2 g Graphit (KS6L) wurden mittels Ultraschall in die PAN-Lösung dispergiert (Hielscher UIS250V; Amplitude 80%, Cycle:
0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ∼30; Aspirator 100%; Pumpe 20%). Es wurden 31,2 g eines braun-schwarzen Pulvers erhalten (86% Ausbeute).
30,7 g des so erhaltenen Präkomposits wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Inertgas carbonisiert: Zuerst Heizrate 10 °C/min, Temperatur 300 °C, Haltedauer 90 min, Ar/H₂-Flussrate
200 ml/min; danach direkt weiter mit Heizrate 10 °C/min, Temperatur 1000 °C, Haltedauer 3 h, Ar/H₂-Flussrate 200 ml/min. Nach dem Abkühlen wurden 20,4 g eines schwarzen Pulvers erhalten (Ausbeute 66%).
Das REM-Bild (7.500fache Vergrößerung) des Produkts in Fig. 4 zeigt nicht-aggregierte, mikroskalige Si/C-Kompositpartikel, die im Inneren Graphit- und Nano-Si-Partikel beinhalten, das REM-Bild in Fig. 5 (30.000 fache Vergrößerung) zeigt die mit Kohlenstoff überzogene Oberfläche der Partikel.

Elementare Zusammensetzung: Si 20,6 Gew-%; C 75,0 Gew.-%; O 3,5 Gew-%; N 2,5 Gew-%; B <50 ppm; P <50 ppm; Al <25 ppm; Ca <50 ppm; Cu <10 ppm; K <50 ppm; Li<10 ppm; Zr 1100 ppm. Partikelgrößenverteilung: Monomodal; D₁₀: 4,68 pm, D₅₀: 7,26 µm, D₉₀: 11,6 µm; (D₉₀-D₁₀)/D₅₀ = 0,95.

### Beispiel 5:

### Nicht-aggregierte Si/C-Kompositpartikel:

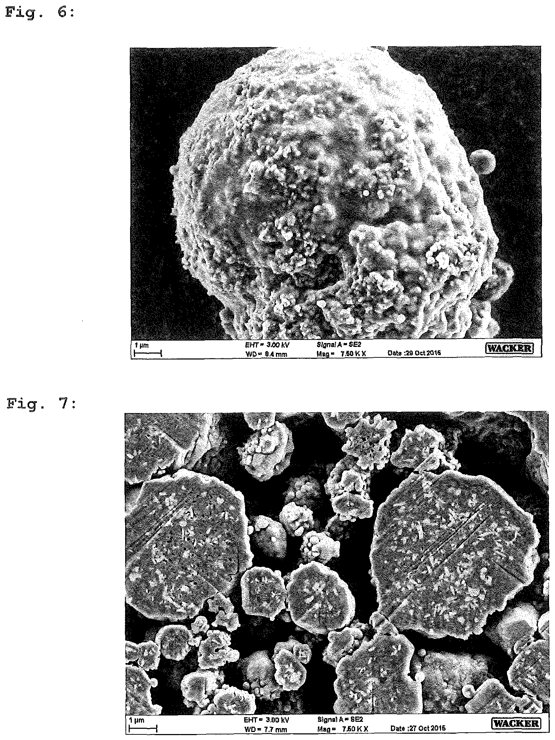

10,8 g Polyacrylnitril (PAN) wurden bei Raumtemperatur in 720 ml Dimethylformamid (DMF) gelöst. 12,6 g einer Silicium-Nanopulver-Suspension (19,8% in Isopropanol; entspricht 2,55 g Nano-Si) und 3,15 g Leitruß (Super P) wurden mittels Ultraschall in die PAN-Lösung dispergiert (Hielscher UIS250V; Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ∼30; Aspirator 100%; Pumpe 20%). Es wurden 13,8 g eines braun-schwarzen Pulvers erhalten (84% Ausbeute).
Das REM-Bild (7.500fache Vergrößerung) in Fig. 6 zeigt nicht-aggregierte, mikroskalige Präkompositpartikel, die vollständig mit sauerstoff-freiem Polymer bedeckt sind.
Der zugehörige Querschnitt in Fig. 7 (7.500fache Vergrößerung) zeigt die gleichmäßige Verteilung der Komponenten innerhalb des Präkompositpartikels.
13,7 g des so erhaltenen Präkomposits wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Intertgas carbonisiert: Zuerst Heizrate 10 °C/min, Temperatur 300 °C, Haltedauer 90 min, Ar/H₂-Flussrate 200 ml/ min; danach direkt weiter mit Heizrate 10 °C/min, Temperatur 1000 °C, Haltedauer 3 h, Ar/H₂-Flussrate 200 ml/min. Nach dem Abkühlen wurden 7,71 g eines schwarzen Pulvers erhalten (Ausbeute 56%).

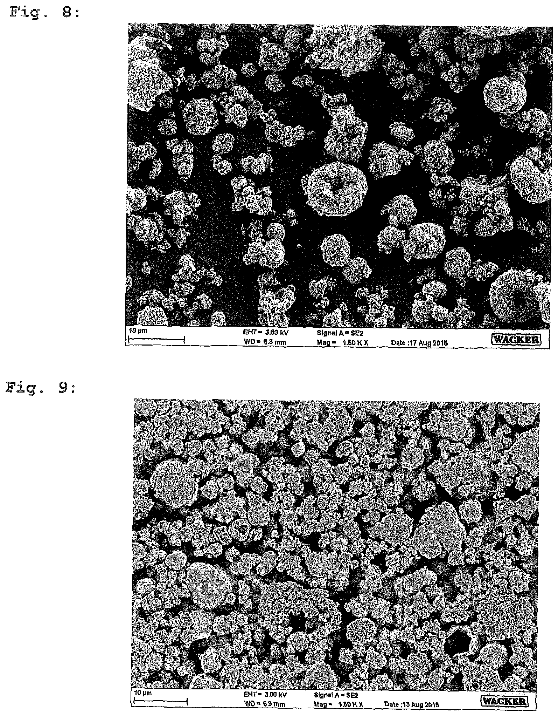

Das REM-Bild (1.500fache Vergrößerung) des Produkts in Fig. 8 zeigt nicht-aggregierte, mikroskalige Si/C-Kompositpartikel, die im Inneren Graphit- und Nano-Si-Partikel beinhalten.
Fig. 9 zeigt die gleichmäßige Verteilung der Komponenten und vollständige Umhüllung mit Kohlenstoff im Querschnitt (1.500fache Vergrößerung). Elementare Zusammensetzung: Si 24,4 Gew-%; C 65,6 Gew.-%; O 4,62 Gew-%; N 2,67 Gew-%; B <50 ppm; P <50 ppm; Al <25 ppm; Ca <50 ppm; Cu <10 ppm; K <50 ppm; Li<10 ppm; Zr 800 ppm.
Partikelgrößenverteilung: Monomodal; D₁₀: 4,15 µm, D₅₀= 6,32 µm, D₉₀: 9,54 µm; (D₉₀-D₁₀)/D₅₀ = 0,85.

2,00 g der Si/C-Kompositpartikel wurden in 15,8 g einer 1,4 Gew.% Lösung von Natrium-Carboxymethylcellulose (Daicel, Grade 1380) in Wasser mittels Dissolver bei einer Umlaufgeschwindigkeit von 2,6 m/s für 5 min und von 13 m/s für 30 min unter Kühlung bei 20°C dispergiert. Nach Entgasen wurde die Dispersion mittels eines Filmziehrahmens mit 0,18 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 120 min bei 80°C und 1 bar Luftdruck getrocknet. Das mittlere Flächengewicht der trockenen Elektrodenbeschichtung betrug 1,36 mg/cm².

Die elektrochemische Bestimmung der initialen Coulomb-Effizienz wurde an einer Halbzelle ohne Referenz durchgeführt. Die Elektrodenbeschichtung wurde als Arbeitselektrode eingesetzt und Lithium-Folie (Rockwood Lithium, Dicke 0,5mm) als Gegenelektrode verwendet. Ein mit 120 µl Elektrolyt getränkter Glasfaser Microfilter (GF Type D, Whatman) diente als Separator. Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.% Vinylencarbonat versetzt war. Der Bau der Zelle erfolgte in einer Glovebox (< 1 ppm H₂O, O₂), der Wassergehalt in der Trockenmasse aller verwendeten Komponenten lag unterhalb von 20 ppm.
Die elektrochemische Messung wurde bei 20°C durchgeführt. Das Laden bzw. Lithiieren der Elektrode erfolgte im cc/cv-Verfahren (constant current / constant voltage) mit konstantem Strom von 33 mA/g (entspricht C/25) und nach Erreichen der Spannungsgrenze von 5 mV mit konstanter Spannung bis Unterschreiten eines Stroms von 20 mA/g Das Entladen der Zelle erfolgte im cc-Verfahren (constant current) mit konstantem Strom von 33 mA/g (entspricht C/25) bis Erreichen der Spannungsgrenze von 1,5 V. Der gewählte spezifische Strom bezog sich auf das Gewicht der Beschichtung.
Die initiale Coulomb-Effizienz des Si/C-Kompositpartikels lag bei 84,6 ± 0,6 % (Mittelwert aus Dreifachmessung) und ist damit signifikant höher als bei Vergleichsbeispiel 7.

### Beispiel 6:

### Nicht-aggregierte Si/C-Kompositpartikel:

9,00 g Polyacrylnitril (PAN) wurden bei Raumtemperatur in 600 ml Dimethylformamid (DMF) gelöst. 13,8 g einer Silicium-Nanopulver-Suspension (26,9% in Ethanol; entspricht 3,7 g Nano-Si) und 7,01 g gemahlene Aktivkohle wurden mittels Ultraschall in die PAN-Lösung dispergiert (Hielscher UIS250V; Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ∼30; Aspirator 100%; Pumpe 20%). Es wurden 21,4 g eines braun-schwarzen Pulvers erhalten (88% Ausbeute).
21,0 g des so erhaltenen Präkomposits wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Intertgas carbonisiert: Zuerst Heizrate 10 °C/min, Temperatur 300 °C, Haltedauer 90 min, Ar/H₂-Flussrate
200 ml/min; danach direkt weiter mit Heizrate 10 °C/min, Temperatur 1000 °C, Haltedauer 3 h, Ar/H₂-Flussrate 200 ml/min. Nach dem Abkühlen wurden 12,3 g eines schwarzen Pulvers erhalten (Ausbeute 58%).

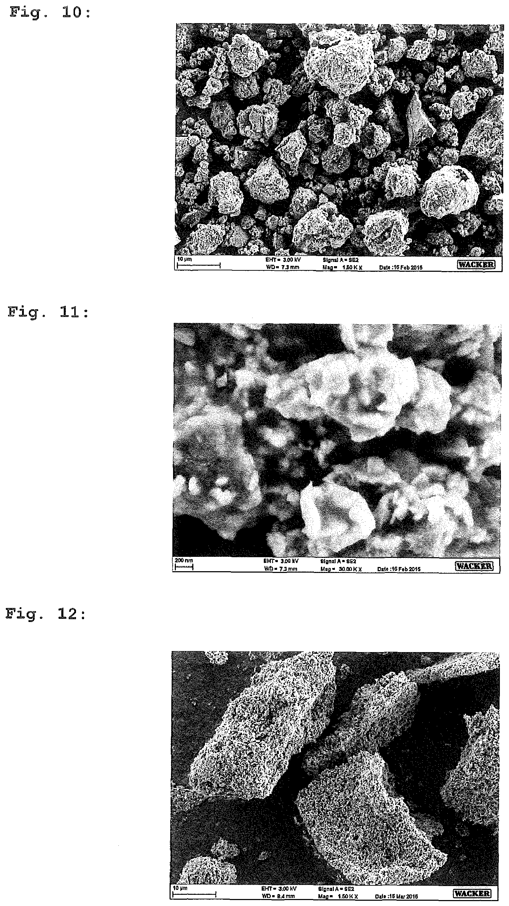

Das REM-Bild (1.500fache Vergrößerung) des Produkts in Fig. 10 zeigt nicht-aggregierte, mikroskalige Si/C-Kompositpartikel, die im Inneren Graphit- und Nano-Si-Partikel beinhalten.
Fig. 11 zeigt die vollständige Umhüllung der Partikel mit Kohlenstoff (30.000 fache Vergrößerung).
Elementare Zusammensetzung: Si 19,6 Gew-%; C 72,2 Gew.-%; O 5,5 Gew-%; N 2,4 Gew-%; B <50 ppm; P 70 ppm; Al 2300 ppm; Ca 945 ppm; Cu 15 ppm; K 323 ppm; Li<10 ppm; Zr 1100 ppm. Partikelgrößenverteilung: Monomodal; D₁₀: 4,57 µm, D₅₀= 7,18 µm, D₉₀: 11, 2 µm; (D₉₀-D₁₀) /D₅₀ = 0,92.

### Vergleichsbeispiel 7:

### Einsatz eines Sauerstoff-haltigen Polymers zur Herstellung von Si/C-Kompositpartikeln:

37,8 g Polyvinylalkohol (PvOH; 20% in Wasser) (LL620, Handelsname der Wacker Chemie) wurden bei Raumtemperatur in 600 ml Wasser/Ethanol-Gemisch (1:1) gelöst. 5,87 g einer Silicium-Nanopulver-Suspension (21,3% in Ethanol; entspricht 1,25 g Nano-Si) und 1,58 g Leitruß (Super P) wurden mittels Ultraschall in die PvOH-Lösung dispergiert (Hielscher UIS250V; Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,5 mm; Düsentemperatur 100 °C; N₂-Gasfluss ∼30; Aspirator 100%; Pumpe 20%). Es wurden 26,9 g eines braun-schwarzen Pulvers erhalten (66% Ausbeute).
25,5 g des so erhaltenen Präkomposits wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Intertgas carbonisiert: Zuerst Heizrate 10 °C/min, Temperatur 300 °C, Haltedauer 90 min, Ar/H₂-Flussrate 200 ml/ min; danach direkt weiter mit Heizrate 10 °C/min, Temperatur 1000 °C, Haltedauer 3 h, Ar/H₂-Flussrate 200 ml/min. Nach dem Abkühlen wurden 3,03 g eines schwarzen Pulvers erhalten (Ausbeute 12%).

Das REM-Bild (1.500fache Vergrößerung) des Produkts in Fig. 12 zeigt aggregierte, mikroskalige Si/C-Kompositpartikel, die im Inneren Leitruß- und Nano-Si-Partikel beinhalten.
Elementare Zusammensetzung: Si 26,8 Gew-%; C 57,8 Gew.-%; O 12,9 Gew-%; N 0,69 Gew-%.
Die Si/C-Kompositpartikel weisen im Vergleich zur Verwendung eines Sauerstoff-freien Polymers (Beispiel 5) somit einen signifikant erhöhten Sauerstoffgehalt auf. Partikelgrößenverteilung: Bimodal; D₁₀: 8,20 µm, D₅₀= 62,9 µm, D₉₀ : 108,9 µm; (D₉₀-D₁₀)/D₅₀ = 1,60_{.}

2,00 g der Si/C-Kompositpartikel wurden in 15,8 g einer 1,4 Gew.% Lösung von Natrium-Carboxymethylcellulose (Daicel, Grade 1380) in Wasser mittels Dissolver bei einer Umlaufgeschwindigkeit von 2,6 m/s für 5 min und von 13 m/s für 30 min unter Kühlung bei 20°C dispergiert. Nach Entgasen wurde die Dispersion mittels eines Filmziehrahmens mit 0,22 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 120 min bei 80°C und 1 bar Luftdruck getrocknet. Das mittlere Flächengewicht der trockenen Elektrodenbeschichtung betrug 1,60 mg/cm².

Die elektrochemische Bestimmung der initialen Coulomb-Effizienz wurde an einer Halbzelle ohne Referenz durchgeführt. Die Elektrodenbeschichtung wurde als Arbeitselektrode eingesetzt und Lithium-Folie (Rockwood Lithium, Dicke 0,5mm) als Gegenelektrode verwendet. Ein mit 120 µl Elektrolyt getränkter Glasfaser Microfilter (GF Type D, Whatman) diente als Separator. Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.% Vinylencarbonat versetzt war. Der Bau der Zelle erfolgte in einer Glovebox (< 1 ppm H₂O, O₂), der Wassergehalt in der Trockenmasse aller verwendeten Komponenten lag unterhalb von 20 ppm.
Die elektrochemische Messung wurde bei 20°C durchgeführt. Das Laden bzw. Lithiieren der Elektrode erfolgte im cc/cv-Verfahren (constant current / constant voltage) mit konstantem Strom von 27 mA/g (entspricht C/25) und nach Erreichen der Spannungsgrenze von 5 mV mit konstanter Spannung bis Unterschreiten eines Stroms von 20 mA/g Das Entladen der Zelle erfolgte im cc-Verfahren (constant current) mit konstantem Strom von 27 mA/g (entspricht C/25) bis Erreichen der Spannungsgrenze von 1,5 V. Der gewählte spezifische Strom bezog sich auf das Gewicht der Beschichtung.
Die initiale Coulomb-Effizienz der Si/C Kompositpartikel von Vergleichsbeispiel 7 lag bei 79,7 ± 0,1% (Mittelwert aus Dreifachmessung) und ist damit signifikant niedriger als bei Beispiel 5.

## Patentansprüche

1. Verfahren zur Herstellung von Präkompositpartikeln, **dadurch gekennzeichnet, dass**
Mischungen enthaltend Siliciumpartikel, als Polymere ausschließlich ein oder mehrere Sauerstoff-freie Polymere, ein oder mehrere Kohlenstoff-Additive basierend auf einer Kohlenstoffmodifikation und ein oder mehrere Dispergierflüssigkeiten mittels Sprühtrocknung getrocknet werden.

2. Verfahren zur Herstellung von Präkompositpartikeln gemäß Anspruch 1, **dadurch gekennzeichnet, dass** ein oder mehrere Kohlenstoff-Additive ausgewählt werden aus der Gruppe umfassend Graphit, Ruß, Aktivkohle, amorphen Kohlenstoff, pyrolytischen Kohlenstoff, Soft-Carbon, Hard-Carbon, Carbon Nanotubes (CNTs), Fullerene und Graphen.

3. Verfahren zur Herstellung von Präkompositpartikeln gemäß Anspruch 1 oder 2, **dadurch gekennzeichnet, dass** ein oder mehrere Sauerstoff-freie Polymere ausgewählt werden aus der Gruppe umfassend Polyacrylnitril, Polyolefine, Polyvinylhalogenide, Polyvinylaromaten, Polyaromaten und polyaromatische Kohlenwasserstoffe.

4. Präkompositpartikel erhältlich nach den Verfahren gemäß Anspruch 1 bis 3.

5. Präkompositpartikel gemäß Anspruch 4, **dadurch gekennzeichnet, dass** die Siliciumpartikel und die Kohlenstoff-Additive in den Präkompositpartikeln ganz oder teilweise von den Sauerstoff-freien Polymeren umhüllt sind und
die Oberfläche der Präkompositpartikel ganz oder teilweise durch die Sauerstoff-freien Polymere gebildet wird.

6. Verfahren zur Herstellung von Si/C-Kompositpartikeln,
**dadurch gekennzeichnet, dass**
Präkompositpartikel der Ansprüche 4 oder 5 thermisch behandelt werden.

7. Si/C-Kompositpartikel erhältlich nach den Verfahren gemäß Anspruch 6.

8. Si/C-Kompositpartikel gemäß Anspruch 7, **dadurch gekennzeichnet, dass** die Siliciumpartikel und die Kohlenstoff-Additive ganz oder teilweise in Kohlenstoff eingebettet sind und
die Oberfläche der Si/C-Kompositpartikel ganz oder teilweise aus Kohlenstoff besteht.

9. Präkompositpartikel gemäß Anspruch 4 oder 5 oder Si/C-Kompositpartikel gemäß Anspruch 7 oder 8, **dadurch gekennzeichnet, dass** die Präkompositpartikel oder die Si/C-Kompositpartikel eine Sphärizität von 0,3 ≤ ψ ≤ 1 haben.

10. Präkompositpartikel gemäß Anspruch 4, 5 oder 9 oder Si/C-Kompositpartikel gemäß Anspruch 7 bis 9, **dadurch gekennzeichnet, dass** die Präkompositpartikel oder die Si/C-Kompositpartikel eine volumengewichtete Partikelgrößenverteilung mit Durchmesser-Perzentilen d₅₀ von 1 µm bis 100 µm haben.

11. Präkompositpartikel gemäß Anspruch 4, 5, 9 oder 10 oder Si/C-Kompositpartikel gemäß Anspruch 7 bis 10, **dadurch gekennzeichnet, dass** die Breite (d₉₀-d₁₀)/d₅₀ der volumengewichteten Partikelgrößenverteilung der Präkompositpartikel oder der Si/C-Kompositpartikel ≤ 1,5 ist.

12. Verwendung der Si/C-Kompositpartikel gemäß Anspruch 7 bis 11 in Elektrodenmaterialien für Lithiumionen-Batterien.

## Claims

1. Method for producing precomposite particles, **characterized in that** mixtures comprising silicon particles, as polymers exclusively one or more oxygen-free polymers, one or more carbon additives based on a carbon modification, and one or more dispersing liquids are dried by means of spray drying.

2. Method for producing precomposite particles according to Claim 1, **characterized in that** one or more carbon additives are selected from the group encompassing graphite, carbon black, activated carbon, amorphous carbon, pyrolytic carbon, soft carbon, hard carbon, carbon nanotubes (CNTs), fullerenes, and graphene.

3. Method for producing precomposite particles according to Claim 1 or 2, **characterized in that** one or more oxygen-free polymers are selected from the group encompassing polyacrylonitrile, polyolefins, polyvinyl halides, polyvinylaromatics, polyaromatics, and polyaromatic hydrocarbons.

4. Precomposite particles obtainable by the methods according to Claim 1 to 3.

5. Precomposite particles according to Claim 4, **characterized in that** the silicon particles and the carbon additives in the precomposite particles are enveloped entirely or partly by the oxygen-free polymers, and the surface of the precomposite particles is formed entirely or partly by the oxygen-free polymers.

6. Method for producing Si/C composite particles, **characterized in that** precomposite particles of Claims 4 or 5 are thermally treated.

7. Si/C composite particles obtainable by the methods according to Claim 6.

8. Si/C composite particles according to Claim 7, **characterized in that** the silicon particles and the carbon additives are embedded entirely or partly in carbon, and the surface of the Si/C composite particles consists entirely or partly of carbon.

9. Precomposite particles according to Claim 4 or 5 or Si/C composite particles according to Claim 7 or 8, **characterized in that** the precomposite particles or the Si/C composite particles have a sphericity of 0.3 ≤ ψ ≤ 1.

10. Precomposite particles according to Claim 4, 5 or 9 or Si/C composite particles according to Claim 7 to 9, **characterized in that** the precomposite particles or the Si/C composite particles have a volume-weighted particle size distribution with diameter percentiles d₅₀ of 1 µm to 100 µm.

11. Precomposite particles according to Claim 4, 5, 9 or 10 or Si/C composite particles according to Claim 7 to 10, **characterized in that** the breadth (d₉₀-d₁₀)/d₅₀ of the volume-weighted particle size distribution of the precomposite particles or of the Si/C composite particles is ≤ 1.5.

12. Use of the Si/C composite particles according to Claim 7 to 11 in electrode materials for lithium-ion batteries.

## Revendications

1. Procédé de fabrication de particules précomposites, **caractérisé en ce que** des mélanges contenant des particules de silicium, exclusivement un ou plusieurs polymères exempts d'oxygène en tant que polymères, un ou plusieurs additifs carbonés à base d'une forme de carbone et un ou plusieurs liquides de dispersion sont séchés par séchage par pulvérisation.

2. Procédé de fabrication de particules précomposites selon la revendication 1, **caractérisé en ce qu'**un ou plusieurs additifs carbonés sont choisis dans le groupe comprenant le graphite, le noir de carbone, le charbon actif, le carbone amorphe, le carbone pyrolytique, le carbone mou, le carbone dur, les nanotubes de carbone (CNT), les fullerènes et le graphène.

3. Procédé de fabrication de particules précomposites selon la revendication 1 ou 2, **caractérisé en ce qu'**un ou plusieurs polymères exempts d'oxygène sont choisis dans le groupe comprenant le polyacrylonitrile, les polyoléfines, les polyhalogénures de vinyle, les composés polyvinylaromatiques, les composés polyaromatiques et les hydrocarbures polyaromatiques.

4. Particules précomposites pouvant être obtenues par le procédé selon les revendications 1 à 3.

5. Particules précomposites selon la revendication 4, **caractérisées en ce que** les particules de silicium et les additifs carbonés sont entièrement ou partiellement enveloppés par les polymères exempts d'oxygène dans les particules précomposites, et la surface des particules précomposites est entièrement ou partiellement formée par les polymères exempts d'oxygène.

6. Procédé de fabrication de particules composites Si/C, **caractérisé en ce que** des particules précomposites selon la revendication 4 ou 5 sont traitées thermiquement.

7. Particules composites Si/C pouvant être obtenues par les procédés selon la revendication 6.

8. Particules composites Si/C selon la revendication 7, **caractérisées en ce que** les particules de silicium et les additifs carbonés sont entièrement ou partiellement incorporés dans du carbone, et la surface des particules composites Si/C est entièrement ou partiellement constituée par du carbone.

9. Particules précomposites selon la revendication 4 ou 5, ou particules composites Si/C selon la revendication 7 ou 8, **caractérisées en ce que** les particules précomposites ou les particules composites Si/C ont une sphéricité de 0,3 ≤ ψ ≤ 1.

10. Particules précomposites selon la revendication 4, 5 ou 9, ou particules composites Si/C selon les revendications 7 à 9, **caractérisées en ce que** les particules précomposites ou les particules composites Si/C ont une distribution des tailles de particules moyennée en volume qui présente des centiles de diamètre d₅₀ de 1 µm à 100 µm.

11. Particules précomposites selon la revendication 4, 5, 9 ou 10, ou particules composites Si/C selon les revendications 7 à 10, **caractérisées en ce que** la largeur (d₉₀-d₁₀)/d₅₀ de la distribution des tailles de particules moyennée en volume des particules précomposites ou des particules composites Si/C est ≤ 1,5.

12. Utilisation des particules composites Si/C selon les revendications 7 à 11 dans des matériaux d'électrodes pour des batteries lithium-ion.
